Europäisches Patentamt

European Patent Office

Office européen des brevets

(11) Veröffentlichungsnummer : **0 658 644 A2**

## (12) EUROPÄISCHE PATENTANMELDUNG

(21) Anmeldenummer : **94890210.1**

(22) Anmeldetag : **14.12.94**

(51) Int. Cl.$^6$ : **D06C 15/00, B29B 15/12, B29C 70/30, B29C 70/68, B32B 3/12, B64D 11/00, // B29K307:04**

(30) Priorität : **17.12.93 AT 2565/93**

(43) Veröffentlichungstag der Anmeldung :
**21.06.95 Patentblatt 95/25**

(84) Benannte Vertragsstaaten :
**AT DE ES FR GB IT LU NL SE**

(71) Anmelder : **FISCHER ADVANCED COMPOSITE COMPONENTS GESELLSCHAFT m.b.H.**
**Fischerstrasse 9**
**A-4910 Ried im Innkreis (AT)**

(72) Erfinder : **Stephan, Dipl.Ing. Walter Alfred**
**Diesseits 91**
**A-4973 St.Martin (AT)**
Erfinder : **Lechner, Dipl.Ing. Richard Reinhold**
**Diesseits 11/1**
**A-4973 St.Martin (AT)**

(74) Vertreter : **Köhler-Pavlik, Johann, Dipl.-Ing.**
**Margaretenplatz 5**
**A-1050 Wien (AT)**

(54) **Gewebe, Prepeg aus diesem Gewebe, Leichtbauteil aus derartigen Prepregs, Überkopf-Gepäckablage für Flugzeuge.**

(57) Gewebe oder Gelege, insbesondere zur Herstellung von Prepregs, speziell zur Anfertigung von Bauteilen in der Luftfahrtindustrie, hergestellte aus Fasern, vorzugsweise Carbonfasern, mit einem Elastizitätsmodul von über 80 000 N/mm$^2$, vorzugsweise von über 200 000 N/mm$^2$, und einem spezifischen Gewicht von vorzugsweise 1,5 g/cm$^3$, maximal 2,1 g/cm$^3$, wobei die Fasern aus Einzelfilamenten bestehen und diese und somit auch das Gewebe bzw. Gelege allenfalls flachgedrückt, vorzugsweise gewalzt, sind. Um ein mechanisch besonders beanspruchbares und dennoch wirtschaftlich herstellbares Gewebe oder Gelege zu erhalten ist vorgesehen, daß jede Faser aus jeweils zumindest 2000, vorzugsweise 3000 Einzelfilamenten (3K = 200 tex = 200 g/1000m) besteht. Das Gewebe oder Gelege wird vorzugsweise zur Herstellung von Prepregs und weiter von Leichtbauteilen, speziell für die Luftfahrtindustrie, verwendet, wobei insbesondere Überkopf-Gepäckablagefächer vorteilhaft daraus herstellbar sind.

Fig. 3

Die Erfindung betrifft ein Gewebe oder Gelege zur Herstellung von Prepregs, die speziell zur Anfertigung von Bauteilen der Luftfahrtindustrie dienen, ein aus diesem Gewebe bzw. Gelege hergestelltes Prepreg, ein Verfahren zu dessen Herstellung, einen Leichtbauteil, der insbesondere für die Luftfahrtindustrie verwendet wird, und einen unter Verwendung derartiger Leichtbauteile hergestellten Behälter, hier speziell eine Überkopf-Gepäckablage für Flugzeuge.

Da in der Luftfahrt ständig das Bestreben nach der Verwendung leichterer Komponenten herrscht, hat man sich zum Ziel gesetzt, alle Bauteile von Flugzeugen oder an Bord verwendete bzw. transportierte Behälter und Komponenten auf eine mögliche Gewichtseinsparung hin zu untersuchen und, soweit machbar, diese mit den zur Verfügung stehenden Mitteln auch zu erreichen.

Die US-PS 3,859,158 beschreibt ein Band aus offenem Gewebe aus Fasermaterialien, wobei die Fasern umgerechnet einen Elastizitätsmodul von über 275500 E/mm$^2$ aufweisen und die aus dem beschriebenen Band hergestellten Kompositartikel spezifische Gewichte von 0,4 bis 1,4 g/cm$^3$ erreichen. Es ist jedoch keinerlei Hinweis zur Erzielung einer speziell mechanisch besonders belastbaren Konstruktion der Kompositteile unter Beibehaltung der leichten Bauweise und insbesondere nicht auf eine Anwendung im Bereich der Luftfahrtindustrie vorhanden.

Die Verwendung von Fasern aus Einzelfilamenten zur Herstellung eines Gewebes für Prepregs ist beispielsweise der JP-A-4-294136 (Toray) zu entnehmen. Allerdings sind dort keinerlei Aussagen über die genaue Anzahl der Filamente pro Faden zu finden, die für eine mechanisch belastbare und dennoch wirtschaftlich herstellbare Konstruktion notwendig ist.

Die Reduktion der Anteile der Lücken in offenen Geweben durch Walzen ist in der EP-A-0 302 449 beschrieben und kann vorteilhafterweise für jede Art von Geweben und Gelegen vorgesehen werden, um die Verarbeitbarkeit zu verbessern.

Die Verwendung von Carbonfasern zur Herstellung von Geweben zur Herstellung von Prepregs ist beispielsweise in der US-PS 4,092,453 beschrieben.

Nun sind aber sowohl Komponenten des Flugzeuges selbst, beispielsweise Inneneinrichtungsteile, wie Überkopf-Gepäckablagefächer, Verkleidungspaneele usw., als auch mit dem Flugzeug mitransportierte Behälter, zum Beispiel Trolleys, Koffer, Zubehörkisten oder dergleichen, so auszulegen, daß die in Hinblick auf die Bauteilsicherheit vorgeschriebenen Festigkeitswerte trotz einer extrem gewichtsparenden "Leichtbauweise" eingehalten werden. Obwohl die Verwendung von Carbonfasern, die eine wesentlich höhere spezifische Festigkeit als Glasfasern besitzen, immer häufiger angestrebt wird, ist es bisher mit den herkömmlichen Konstruktionen noch nicht zufriedenstellend gelungen, eine wesentliche Gewichtsreduktion bei ausreichender Stabilität gegenüber Konstruktionen mit Glasfaserwerkstoffen zu erzielen und darüberhinaus noch eine wirtschaftliche und rationelle Fertigung zu garantieren.

Es war daher die Aufgabe der vorliegenden Erfindung, vorerst ein Gewebe bzw. ein Gelege, beispielsweise aus unidirektional nebeneinanderliegenden Fasern, die allenfalls lediglich durch ein Art Absteppung gegen Verschiebung gesichert sind, anzugeben, das bei hoher Festigkeit ein geringes Gewicht aufweist und noch dazu einfach und wirtschaftlich herzustellen ist und sich damit besonders zur Herstellung von Werkstoffen, speziell Leichtbauteilen, für die Luftfahrtindustrie eignet.

Eine zweite Aufgabe bestand darin, einen Ausgangswerkstoff, speziell in der Form eines vorimprägnierten Gewebes oder Geleges (preimpregnated fabric, kurz Prepreg genannt), zur Herstellung verschiedenster, leichter und doch sehr stabiler Komponenten und Bauteile für die Flugzeugindustrie bzw. zur Herstellung von Zubehörartikeln für diesen Bereich zu finden.

Eine weitere Aufgabe der vorliegenden Erfindung war die Festlegung eines vorteilhaften Verfahrens zur Verarbeitung des Gewebes oder Geleges und zur Herstellung eines vorimprägnierten Gewebes oder Geleges sowie geeigneter Maßnahmen und Parameter zur Herstellung eines Leichtbauelementes.

Eine weitere Aufgabe war schließlich die Konstruktion eines gewichtsreduzierten und dennoch die geforderten Festigkeitswerte aufweisenden Behälters, der an Bord von Flugzeugen, und hier speziell als Überkopf-Gepäckablage, Verwendung findet. Dabei sind aber unter Berücksichtigung der oben genannten Kriterien und Merkmale auch alle andere Behälter, wie beispielsweise Trolleys, Koffer, Kisten etc., gleichermaßen inbegriffen.

Zur Lösung der ersten Aufgabe ist bei einem Gewebe oder Gelege, insbesondere zur Herstellung von Prepregs, speziell zur Anfertigung von Bauteilen in der Luftfahrtindustrie, hergestellte aus Fasern, vorzugsweise Carbonfasern, mit einem Elastizitätsmodul von über 80 000 N/mm$^2$, vorzugsweise von über 200 000 N/mm$^2$, und einem spezifischen Gewicht von vorzugsweise 1,5 g/cm$^3$, maximal 2,1 g/cm$^3$, wobei die Fasern aus Einzelfilamenten bestehen und diese und somit auch das Gewebe bzw. Gelege allenfalls flachgedrückt, vorzugsweise gewalzt, sind, erfindungsgemäß vorgesehen, daß jede Faser aus jeweils zumindest 2000, vorzugsweise 3000 Einzelfilamenten (3K = 200 tex = 200g/1000m) besteht. Erst dieses Merkmal gestattet es, ein derartiges Gewebe bzw. Gelege wirtschaftlich fertigen zu können und auch einen optimalen Kompromiß eines einerseits geringem Gewicht und andererseits hoher Festigkeit zu erreichen.

Das Zielgewicht des Rohgewebes bzw. -geleges, das ohne Harzanteil angegeben wird, sollte möglichst niedrig sein. Dies kann, neben der mit vorzugsweise 3000 Einzelfilamenten vorgegebenen Fadendicke und dem damit definiertem Materialgewicht, auch noch durch die Anzahl der Fäden/Länge bzw. Fläche ($cm^2$) des Gewebes bzw. Geleges eingestellt werden. Das Ziel eines möglichst geringen Flächengewichtes kann vorteilhafterweise durch ein sogenanntes "offenes Gewebe", bei dem zwischen den einzelnen Fäden gleichbleibende Abstände eingehalten werden, erreicht werden. Im vorliegenden Fall hat sich die Anzahl von 3,71 ± 5% Fäden/cm, oder 3,71 x 3,71 Fäden/$cm^2$, unter Berücksichtigung der zusätzlichen, weiter unten geschilderten Gewebeparameter als zielführend erwiesen.

Erfindungsgemäß liegt das Rohgewicht des Gewebes oder Geleges, das nur das Flächengewicht der verarbeiteten, vorzugsweise verwebten, Carbonfasern ohne Harzanteil angibt, unter 190 g/$m^2$, vorzugsweise zwischen 170 und 150 g/$m^2$, speziell bei 150 +5/-2 g/$m^2$.

Da die Verarbeitungs- und Gebrauchseigenschaften nicht nur vom Flächengewicht, sondern auch von den restlichen Parametern, wie Harzgehalt und allenfalls Webstil abhängig sind, und da auch aufgrund der extrem gewichtsreduzierten Herstellungsart neue Fertigungsschritte in die Produktion des Prepregs mit aufgenommen werden mußten, welche die Verarbeitbarkeit des vorimprägnierten Gewebes oder Geleges bei der Erzeugung leichter Flugzeugkomponenten gewährleisten, sind selbstverständlich diese weiteren Prepregmerkmale sowohl auf die Herstellung des leichten Grundgewebes bzw. -geleges selbst als auch noch, bedingt durch die Wechselwirkung der einzelnen Parameter, aufeinander abzustimmen.

Damit während der Handhabung bei der Verwendung von Geweben in der Herstellung, z.B. bereits während des Webvorganges oder auch während der Imprägnierung, die Fadenrichtung nicht geändert wird, und damit diese Abweichungen vom normalen Fadenlauf, die wiederum die mechanischen Eigenschaften eines solchen Gewebes verringern, gering gehalten werden können, mußte die Webart so gewählt werden, daß die größtmögliche Dimensionsstabilität erreicht wurde. So wurde eine Abweichung des Schußfadens von 15 mm/m als zulässige Obergrenze festgesetzt, bei welcher noch keine Schwächung des Gewebes insofern zu erwarten war, daß die Bauteilsicherheit nicht mehr gegeben wäre.

Obwohl neben der Leinwandbindung, bei welcher jeweils ein Schuß- über einen Kettfaden flottiert, eigentlich verschiedenste Webarten denkbar und anwendbar sind, ist diese Webart, im englischen Sprachgebrauch als "Plain Weave" (Leinwandbindung) bezeichnet, die wirtschaftlichste, da einfachste Variante, welche durch die Art der Bindung auch die Vorteile der Dimensionsstabilität und des geringen Ausfransens bietet.

Bei Webarten, bei denen der Schußfaden über zwei oder mehrere Kettfäden flottiert, sind erforderlichenfalls noch bessere mechanischen Eigenschaften, wie Biege- und Zugfestigkeit, gegenüber der Leinwandbindung zu erzielen. Die im Vergleich zu anderen Webarten, beispielsweise Panama-, Köper- oder Atlasbindung, geringere Drapierfähigkeit bei Leinwandbindung spielt wegen der im wesentlichen ebenen Flächen bei der spezifischen Anwendung in der Luftfahrtindustrie keine nachteilige Rolle und bedurfte somit keiner Korrektur durch andere Gewebeparameter.

Die wesentliche Forderung, daß die Festigkeitseigenschaften von Leichtbauteilen erfüllt sind, setzt voraus, daß sowohl die einzelnen Fäden zueinander als auch die jeweiligen Lagen untereinander in ausreichender Verbindung stehen. Der durch die Notwendigkeit eines offenen Gewebes bzw. eines Geleges mit größeren Fadenabständen bedingte geringere Kontaktfläche und die durch die größtmögliche Verflechtungsfrequenz bedingte Herabsetzung sowohl der Verbindungsfläche als auch der mechanischen Eigenschaften wird erfindungsgemäß vorteilhafterweise mittels einer geeigneten Auswahl der Art und Menge eines aushärtbaren Kunstharzes (Duroplast) bei der Imprägnierung des Gewebes bzw. Geleges begegnet.

Somit wurde die zweite Aufgabe dieser Erfindung speziell durch eine leichte Erhöhung des Harzgehaltes gegenüber herkömmlichen Werkstoffen für vergleichbare Anwendungen gelöst wobei der Harzgehalt, der auch die flüchtigen, aus der Lösungsmittel-Imprägnierung kommenden Bestandteile einschließt, zwischen 37 % und 55 %, vorzugsweise zwischen 46 % und 50 %, speziell bei 47 %, liegt. Bei entsprechender Auswahl eines festen Fadenmaterials kann somit auch eine ausreichende Festigkeit des Faserverbundwerkstoffbauteiles selbst gewährleistet werden. Gegenüber herkömmlichen Prepregs wie sie in der Flugzeug- und Flugzeugzubehörindustrie für vergleichbare Bauteile üblich sind, wird die erfindungsgemäße geringfügige Erhöhung des durchschnittlichen Harzgehaltes über 37% hinaus aber durch die Gewichtsverminderung des Rohgewebes mehr als übertroffen. Je nach Harzgehalt und Anteil der flüchtigen Bestandteile lassen sich die vorimprägnierten Gewebe in einem Gewicht unter 300 g/$m^2$, idealerweise mit 270 g/$m^2$, jedoch nicht unter 250 g/$m^2$ herstellen, sodaß sich schließlich zwischen 20 und 35% Gewichtsreduktion beim fertigen Bauteil realisieren lassen.

Vorteilhafterweise ist die Verwendung von Phenolharz, allenfalls von Epoxydharz, mit einem H-Typ-Lösungsmittel (90% Ethanol und 10% Azeton), vozugsweise einem HE-Typ-Lösungsmittel (100% Ethanol) vorgesehen, die auch einen im Vergleich zu herkömmlichen Prepregsystemen verringerten Gehalt an freiem Formaldehyd aufweisen. Phenolharze haben neben ihrer geringen Kriechneigung, der hohen Formbeständigkeit in der Wärme und der guten Chemikalienbeständigkeit speziell für die Anwendung im Flugzeuginnenraum den Vorteil der schweren Entflammbarkeit. Die Wahl und Menge des Lösungsmittels, das beim Imprägnieren verwendet wird, beeinflußt sehr wesentlich die Verarbeitbarkeit der Materialien durch Änderung der Klebrigkeit oder auch Art, Zeitpunkt und Menge der produzierten, flüchtigen Bestandteile. Der Gehalt an flüchtigen Bestandteilen, der jedoch bei Phenolharzen auch den während der Polykondensation produzierten Wasseranteil einschließt, liegt idealerweise unter dem Maximum von 9%. Die vorteilhafteste Lösung wird in Lösungsmitteln gefunden die auf Ethanol-Basen (HE) aufbauen und eine gute Verarbeitbarkeit - aufgrund des höheren Siedepunktes (Zeitpunkt der Produktion der flüchtigen Bestandteile) - und Klebrigkeit sowie eine geringere Gesundheitsgefährdung garantieren, wenngleich auch andere Lösungsmittel (H) die Verarbeitung der imprägnierten Gewebe oder Gelege sowie die Gebrauchseigenschaften der Bauteile, die aus diesen Geweben oder Gelegen hergestellt worden sind, ebenfalls gewährleisten.

Das Verfahren zur Herstellung eines Prepregs, ist erfindungsgemäß gekennzeichnet durch das Imprägnieren eines Gewebes oder Geleges, vorzugsweise eines Gewebes oder Geleges in einer der oben beschrieben Ausführungen, mit einem härtbaren Kunstharz und durch das Walzen des Gewebes bzw. Geleges vor, nach oder auch während des Imprägnierens, gegebenenfalls auch zwischen jeweils zwei Imprägnierschritten. Neben den bereits zuvor dargestellten Vorteilen für die gewalzten Fasern, wie Erhöhung der Klebrigkeit und statischen Tragfähigkeit, ist dieser Verarbeitungsschritt auch besonders für sichtbare Oberflächen von Bauteilen des Flugzeuginnenraumes vorteilhaft. Durch das Schließen beispielsweise der Gewebelücken wird der Abdruck der Struktur auf Sichtfolien, z.B. Tedlar, vermindert und dadurch der Einsatz von optischen Korrekturmaßnahmen, Füllen und Lackieren, weitgehend herabgesetzt.

Das dem oder jedem Walzschritt vorangehende Imprägnieren erfolgt vorzugsweise mit einem höheren Harzgehalt als dem beim Endprodukt geforderten, der dann durch das nachfolgende Walzen des Gewebes oder Geleges bei gleichzeitigem Flachdrücken von dessen Fasern verringert wird. Dies stellt eine einfache Methode dar, bei der nach einer kurzen Einstellzeit die schnelle und wirtschaftliche Erzeugung der Prepregs mit den gewünschten Merkmalen, wie Dicke und Harzgehalt, möglich ist.

Entsprechend einem weiteren Merkmal der Erfindung wird die dritte Aufgabe gelöst durch die Schaffung eines Leichtbauteiles, insbesondere einer Platte für die Luftfahrtindustrie, beispielsweise für die Verwendung als Wandpaneel, Bauplatte oder dergleichen, bestehend aus zumindest einem, vorzugsweise aus Wabenmaterialien bestehenden Kern, der sich über den überwiegenden Flächenanteil des Bauteils erstreckt, und zumindest je einer Deckschicht zu beiden Seiten des oder jedes Kerns, welcher dadurch gekennzeichnet ist, daß zumindest eine der Deckschichten, vorzugsweise beide Deckschichten aus einem Laminat, vorzugsweise unter Verwendung eines Gewebes oder Geleges nach einem der oben beschriebenen Ausführungen, das mittels eines Klebers mit dem Kern verbunden wurde oder einem Prepreg gemäß einem der zuvor angeführten Absätze besteht.

Es kann notwendig und auch zweckmäßig sein, daß zur Erhöhung der Festigkeit des Leichtbauteils an allfälligen Knick- oder Biegestellen des Bauteils zumindest eine zusätzliche, diese Knick- oder Biegestellen überlappende Prepreg-Lage aus Glasfasergewebe oder aus Laminat unter Verwendung eines Gewebes oder Geleges nach einer der oben beschriebenen Ausführungen oder vorzugsweise aus Prepregs gemäß einem der vorhergehenden Absätze vorzusehen ist. Da aus den Versuchen ersichtlich war, daß das Versagen durch Ablösen der Deckschichten vom Kernwerkstoff bewirkt worden war, werden die zusätzlichen Prepreg- oder Laminat-Lagen vorzugsweise direkt auf den Kernwerkstoff, unterhalb der oder jeder Deckschicht vorgesehen.

Mit entsprechenden Vorteilen wie zuvor angegeben wird gemäß einem weiteren Merkmal der Erfindung an Stellen, an denen Bohrungen oder Ausnehmungen vorgesehen werden müssen, zumindest eine zusätzliche Prepreg- Laminat-Lage aus Glasfasergewebe, vorzugsweise auf der dem Kern abgewandten Seite der Deckschicht, vorgesehen.

Die nächste Aufgabe der Erfindung, die Schaffung eines leichten und doch stabilen Behälters, speziell für die Luftfahrtindustrie, wird durch einen Behälters gelöst, der aus ebenen End- und allenfalls Zwischenwänden, sowie aus einem gebogenen oder geknickten, zumindest teilweise die Seitenwände oder Ummulde bildenden Bauteil, besteht und dadurch gekennzeichnet ist, daß die End- und /oder die Zwischenwände und/oder der die Ummulde bildende Bauteil in Sandwichbauweise gefertigt sind und aus Faserverbundbauteilen entsprechend den zuvor beschriebenen Leichtbauteilen aufgebaut sind.

Vorteilhafterweise wird als Kernwerkstoff ein Wabenmaterial eingesetzt, das vorzugsweise hexagonale Struktur und eine Rohdichte unter 60 kg/m$^3$ besitzt. Durch diese Konstruktion gelingt es, eine entsprechende Gewichtsverminderung mit einer die hohe, im Luftfahrtbereich aus Sicherheitsgründen geforderte Belastbarkeit erfüllenden Bauweise zu vereinen, sodaß der Behälter sowohl zum Einbau als Flugzeugkomponente als auch als mitzutransportierender Behälter, beispielsweise als Trolley, Koffer oder Kiste, besser als bisherige Konstruktionen geeignet ist.

Gemäß einem weiteren Merkmal der Erfindung ist der die Seitenwände bzw. Ummulde bildende Bauteil zumindest über einen Teilbereich des Umfanges der End- und/oder Zwischenwände durch Überlappung der Prepregs oder Laminate und über einen anderen Teilbereich des Umfanges der ebenen End- und/oder Zwischenwände mittels einer nachträglich angefertigten Verbindung, vorzugsweise einer Verschraubung, Verklebung oder Verschweißung, verbunden. Durch die einfache Entformung des ausgehärteten Behälters ist die Herstellung einer monolithischen Struktur bei nur wenigen zusätzlichen Befestigungsmitteln bzw. Fertigungsschritten gegeben, und darüberhinaus ist durch die Einsparung von zusätzlichem Material (Verbindungseinrichtungen der die Wände bildenden Platten) das resultierende Gesamtgewicht reduziert und auch der Herstellungsprozeß, bei sehr guter struktureller Stabilität des Behälters, bedeutend vereinfacht.

Damit Befestigungs- oder Krafteinleitungsstellen so ausgebildet sind, daß die geforderten Belastungen, die lokal und von dort aus in die gesamte Struktur des Bauteiles eingeleitet werden, ertragen werden können, bzw. die Delaminierung, die Ablösung der Decklagen vom Kernmaterial verhindert wird, ist an den Übergangsstellen zwischen End- und/oder Zwischenwänden und dem die Seitenwände oder Ummulde bildenden Bauteil und/oder an Biege- bzw. Knick- oder auch Krafteinleitungsstellen in den genannten Wänden bzw. dem Bauteil zumindest eine weitere, die Übergangs-, Biege-,bzw. Knickstellen überlappende Laminat- oder Prepreg-Lage vorgesehen. Diese zusätzliche(n) Lage(n), die vorteilhafterweise unterhalb der oder mehrerer Deckschicht(en), vorzugsweise direkt auf dem Kernwerkstoff, vorgesehen sind, geben den bei Spitzenbelastungen besonders gefährdeten Stellen durch lokale Vergrößerung der Steifigkeit sowie auch durch Erhöhung des Harzgehaltes und der damit verbundenen Vergrößerung der mittragenden Fläche sowohl zwischen den einzelnen Lagen selbst als auch zwischen dem die Deckschicht bildenden Laminat und dem Kern ausreichende Festigkeit, sodaß alle selbst in Extremfällen, das heißt, bei kritischen Flugsituationen auftretende Belastungen ertragen werden.

Die Einleitung der Kräfte und somit die Überleitung der Spannungen in den Bauteil sollte verlaufend sein, damit die Gefahr von Beschädigungen durch Spannungsspitzen hintangehalten wird. Diese Spannungsspitzen, die aus sprunghaften Querschnittsänderungen, bzw. Kerben und Kanten sowie Dickenunterschiede durch unterschiedliche Lagenanzahl resultieren, werden durch zumindest zwei einander überdeckende Laminat- oder Prepreg-Lagen mit unterschiedlichen, aber aufeinander abgestimmten Abmessungen vermieden, wobei auch das optische Aussehen, das bei sichtbaren Bauteilen im Flugzeuginnenraum ebenso von Bedeutung ist wie die Stabilität, bedeutend gefälliger wird.

Gemäß einem weiteren Merkmal der Erfindung ist zur Erhöhung der Sicherheit gegen Delaminationen an Stellen, an denen Bohrungen oder Ausnehmungen vorgenommen werden müssen, zumindest eine zusätzliche Laminat- oder Prepreg-Lage, vorzugsweise aus Glasfasergewebe so vorzusehen, daß die am oder im Bauteil verbleibenden Randzonen in einem ausreichenden, den bei der Bearbeitung eingebrachten Reaktionskräften entsprechenden Widerstand bietenden Bereich überdeckt sind. Dabei wird diese Lage zweckmäßigerweise so plaziert, daß sie auf der dem Bearbeitungswerkzeug zugewandten Seite, im speziellen Fall auf der Außenseite des Behälters als Deckschicht des Laminates zu liegen kommt; obwohl auch eine Anbringung auf der dem Kern zugewandten Seite, also zwischen Deckschicht und Kern, möglich ist, diese jedoch eine weniger optimale Einstellung der Bearbeitungsparameter notwendig macht.

An Stellen, an denen End-, Zwischenwände, Befestigungen oder Versteifungsrippen mit dem die Seitenwände oder Ummulde bildenden Bauteil verbunden werden müssen, ist zumindest eine zusätzliche Laminat- oder Prepreg-Lage, idealerweise aus Glasfasermaterial, welches auch durch die engere Maschenweite ein mögliches Ausfransen des mit großer Maschenweite gewebten Carbonmaterials geeignet verhindert, vorzugsweise oberhalb der Deckschicht und praktischerweise von der vorderen Kante der oberen bis zur vorderen Kante der unteren Seit des die Ummulde bildenden Bauteiles, vorzusehen. Das Verbinden bzw. das Anbringen der genannten Bauteile mittels Schrauben, Nieten oder dergleichen wird durch das einwandfreie Herausarbeiten der zum Einkleben der Inserts notwendigen Bohrungen, bzw.allfälliger Ausnehmungen, somit sicher durchführbar.

Mit den gleichen Vorteilen, die soeben im oberen Abschnitt angeführt worden sind, werden bei dem die Ummulde bildenden Bauteil mit zu beiden Seiten der Zwischenwand bzw. Versteifung vorgesehenen Ausnehmungen für Installations- und/oder Servicezwecke wie im Fall der Anfertigung von Befestigungsbohrungen diese Bereiche durch eine Lage Laminat oder Prepreg, wobei idealerweise im speziellen Fall ein Glasfaserwerkstoff verwendet wird, besonders ausgeführt.

Ebenso wie in Bereichen von Bohrungen ist es an Stellen starker Richtungsänderung, wie sie im Bereich der Rückwand vorkommen, wo ebene Wände in einem Winkel zwischen 90° und 180° zusammenstoßen, produktionsspezifisch nicht abzusichern, daß in besagten Bereichen während dem Auftreten großer Belastungen keine Ablösung des Laminates, gefertigt aus vorzugsweise dem erfindungsgemäßen Prepreg mit geringer beharzter Kontaktfläche, vom Kern auftritt. Es ist daher sinnvoll diesen Bereich durch eine zusätzliche Lage Laminat oder Prepreg, zweckmäßigerweise aus Glasfaserwerkstoff, das in der Größe zumindest soweit in die ebenen Flächen hineinreicht, daß durch die Produktionstechnologie eine sichere Aushärtung, bzw. Verbindung der Deckschicht mit dem Kern gegeben ist, das heißt, der Druck, der beim Aushärten durch die Druckbleche aufgebracht wird, noch in besagten Bereichen auftritt.

Eine Überkopf-Gepäckablage, bestehend aus dem erfindungsgemäßen Behälter, der entsprechend einem der vorhergehenden Absätze aus zwei ebenen, im wesentlichen trapezförmigen Endwänden, einer im Inneren des Behälters nachträglich angebrachten Zwischenwand bzw. Versteifungs- oder Teilungsrippe, und einem die Ummulde bildenden, monolithischen Bauteil aufgebaut ist, ist dadurch gekennzeichnet, daß der Bauteil im Bereich von Bohrungen in den Endwänden nahe einem oberen Eckpunkt und nahe der die Deckschicht des Behälters bildenden Laminatschicht, die zur Aufhängung des Behälters dienen, mit mehreren, insbesondere drei bis fünf, vorzugsweise vier, zusätzlichen Lagen von Carbon-Laminaten oder Carbon-Prepregs verstärkt ist. Dadurch werden die am meisten gefährdeten Stellen der Aufhängung der Gepäckablage derart ausgeführt, daß bei leichtestmöglicher Bauweise alle vorgeschriebenen Festigkeitswerte, erreicht und sogar übertroffen, bzw. die zulässigen Verformungswerte unterschritten werden können. Damit der speziellen Verformung, die in der Benützung des Bauteiles auftreten kann, bzw. der Verkürzung des Behälters und damit dem Kippen der Endwände sowie den daraus resultierenden Kräften in Längsrichtung am Besten begegnet werden kann, ist das Herausziehen der Lagerungen des Behälters zu vermeiden. Das wird zweckmäßigerweise dadurch erreicht, daß die zusätzlichen Lagen in den Bereichen, in denen Rückwände unterschiedlicher Neigung mit der jeweiligen Endwand während des Aushärtens mittels des die Deckschicht bildenden Prepregs oder durch Aufkleben eines Laminates einstückig verbunden werden, auf die Endwände hin in ausreichender Größe umgeschlagen sind.

In vielen Fällen notwendigerweise verläuft ein Verstärkungselement zwischen dem unteren und dem hinteren Wandabschnitt des die Ummulde bildenden Bauteiles und es ist im Bereich dieses Verstärkungselementes zumindest ein dieses Element überdeckendes und vorzugsweise soweit in das eigentliche Laminat, konstruktionsspezifisch den Raum zwischen Deckschicht und Kern, reichendes zusätzliches Carbon-Prepreg oder -Laminat vorgesehen, sodaß die eingebrachten Kräfte ertragen werden und die Einleitung der Kräfte in einen größeren Bereich stattfindet, was dem Behälter weiter Stabilität verleiht.

Gemäß einem weiteren Erfindungsmerkmal verläuft ein Verstärkungselement in Höhe der Zwischenwand bzw. Versteifungsrippe zwischen dem unteren und dem hinteren Wandabschnitt des Bauteils und ist im Bereich dieses Verstärkungselementes zumindest ein dieses Element überdeckende Lage Carbon-Prepreg oder -Laminat vorgesehen, das vorzugsweise so groß gewählt ist, daß die Enden auf dem hinteren und dem unteren Wandabschnitt gleichweit von der unteren Bauteilkante entfernt sind. Damit werden die auftretenden Kräfte gleichmäßig in den Bauteil eingeleitet. Im Bereich der Zwischenwand bzw. Versteifungsrippe ist bei den Befestigungen an der Rückwand ein zumindest so großer Zuschnitt Carbon Prepreg, entsprechend dem oben angeführten vorimprägnierten Gewebe, anzubringen, daß dieser über die Bereiche der höchsten Krafteinleitung, zumindest jedoch über die Bereiche der Besfestigungen, z.B. Schrauben oder Verklebungspositionen, in so einer Weise geführt wird, daß die bei Belastungen auftretenden Spannungen auf ein Mindestmaß abgebaut werden können und keine Delaminationen zwischen Deckschichten und Kern auftreten. Produktionstechnisch scheint es zweckmäßig, daß sich diese zusätzliche Lage Carbon direkt in Kontakt mit dem Kern befindet, obwohl aus Gründen der Festigkeit und Stabilität auch jede andere Reihenfolge denkbar wäre.

In der nachfolgenden Beschreibung soll die Erfindung anhand eines nicht einschränkenden Ausführungsbeispiels unter Bezugnahme auf die beigefügten Zeichnungen näher erläutert werden.

Dabei zeigt die

Fig. 1    einige Gewebearten, die zur Herstellung des erfindungsgemäßen Prepregs in Frage kommen.

Fig. 2    zeigt schematisch ein vorteilhaftes Herstellungsverfahren für das erfindungsgemäße Prepreg,

Fig. 3    den Aufbau einer Ausführungsform eines erfindungsgemäßen Leichtbauteiles, wie er auch für die Herstellung von Behältern od. dgl. für die Luftfahrt Anwendung findet. In

Fig. 4    ist eine schematische perspektivische Ansicht einer Überkopf-Gepäckablage für Flugzeuge als Beispiel für einen erfindungsgemäßen Behälter, vorzugsweise aufgebaut aus Wandelementen mit dem Aufbau von Fig. 3.

Fig. 5    ist ein Schnitt durch eine Gepäckablage von Fig. 4.

Fig. 6    ist eine perspektivische schematische Darstellung der Gepäckablage mit Angabe der Positionen von zusätzlichen Verstärkungslagen aus Prepregs und

Fig. 7    stellt in vergrößertem Maßstab schematisch den Aufhängungsbereich der Gepäckablage dar.

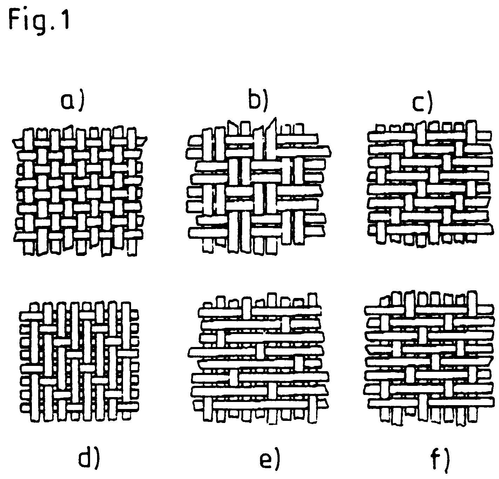

In Fig. 1 sind einige Gewebearten dargestellt, die neben oder in Verbindung mit Gelegen zur Herstellung von Prepregs verwendet werden können. Die einzelnen Fäden der Gewebe oder Gelege sind aus Materialien mit hoher Festigkeit, d. h. mit einem Elastizitätsmodul, E, größer als 80 000 N/mm$^2$, vorzugsweise hergestellt aus Carbonfasern mit E $\cong$ ca. 200 000 N/mm$^2$ und dabei niedrigem Gewicht (1,75 g/cm$^3$ gegenüber Glasfasern mit 2,5 g/cm$^3$), wobei jeder Faden sinnvollerweise aus 3000 Einzelfilamenten, das ungefähr 200 g/1000m entspricht, besteht. Das Gewebe in Fig. 1a zeigt die erfindungsgemäß vorzugsweise angewendete Leinwandbindung ("Plain Weave"), welche die größte Widerstandsfähigkeit gegen Ausfransen beim Zuschnitt und die höchste Dimensionsstabilität während der Handhabung bietet. Fig. 1b zeigt die sogenannte Köpperbindung ("Twill"). Diese Bindung zeichnet sich durch höhere Festigkeit und Steifigkeit des Laminates, bedingt durch die geringere Fadenablenkung, und durch bessere Drapierfähigkeit aus. Fig. 1c zeigt das Atlasgewebe, das sich aufgrund der sehr geringen Fadenablenkung durch besonders gute Drapierfähigkeit auszeichnet und auch wegen der erreichbaren guten Oberflächen für stark sphärische, optische Teile Anwendung findet.

Für die Herstellung der erfindungsgemäßen leichten Gewebe oder Gewirke wird die Anzahl der Fäden pro Flächeneinheit so weit als möglich verringert, soweit es die geforderten mechanischen Eigenschaften der daraus hergestellten Bauteile - was vorzugsweise in der Praxis durch verschiedene Tests ermittelt wird - zuläßt. Vorzugsweise wird das Flächengewicht des Gewebes bis auf 170 g/m$^2$ und sogar noch bis auf 150 g/m$^2$ verringert, wobei sich dann ein Wert von 3,71$\pm$5 % Fäden/cm Schuß- oder Kettfaden ergibt.

In weiterer Folge wird der Einfachheit halber - und da dies die bevorzugte Variante ist - nur mehr von Geweben gesprochen, obgleich natürlich auch gleichartige Ausführungen unter Verwendung von Gelegen möglich sind, sofern dies nicht offensichtlich aufgrund der Bezugnahme auf beispielsweise Bindungsart, etc. nicht der Fall sein kann.

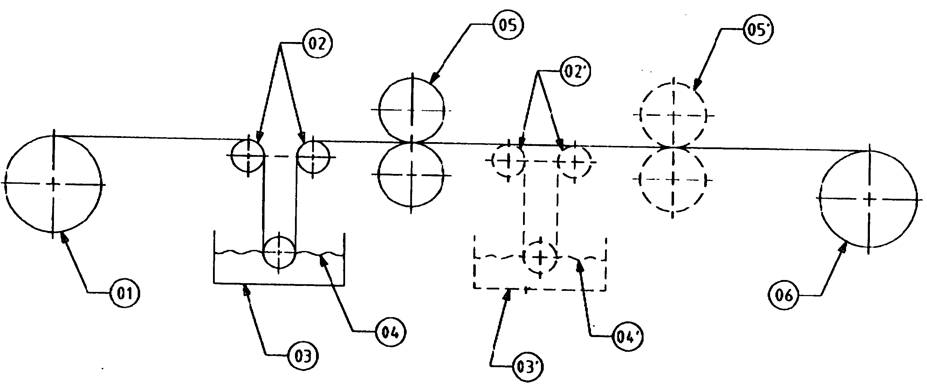

Aus Fig. 2, der schematischen Darstellung eines vorteilhaften Herstellungsverfahren eines Prepreg-Materials werden weitere Eigenschaften des Gewebes und des daraus hergestellten Prepregs deutlich. Das trockene,eventuell auch bereits gewalzte Gewebe 1, wird über Rollen 2 durch ein Bad 3 geführt, in welchem das Gewebe 1 mit einem Gemisch 4 aus Harz und Lösungsmittel - welches vom H- oder zweckmäßiger vom HE-Typ ist - getränkt wird, wobei die Prozeßgeschwindigkeit bzw. die weiteren Prozeßparameter, vorteilhafterweise durch Praxistests ermittelt, derart eingestellt werden, daß der Harzgehalt, und hierbei vorzugsweise von Phenolharzen, gegebenenfalls jedoch auch von Epoxydharzen, sinnvollerweise nach dem Bad 3 etwas größer ist als der geforderte Harzgehalt des fertigen Prepregs. Anschließend wird das getränkte Gewebe, abhänigig ob dieses bereits gewalzt verarbeitet wurde oder im Rohzustand imprägniert worden ist, zu Walzen 5 geführt, in denen das Gewebe gewalzt und damit auch die Fäden flachgedrückt werden oder auch nur die Dicke der Harzschicht, indem ein Teil des Harz-Lösungsmittel-Gemisches wieder herausgedrückt wird, eingestellt werden kann. Allenfalls könnte, wie durch strichlierte Darstellung angedeutet ist, nach dem ersten Walzen ein weiterer Imprägnierschritt in einem Bad 3' mit einem gleichen oder auch unterschiedlichen Lösungsmittel-Harz-Gemisch 4' erfolgen, wonach ein weiteres Mal das erneut getränkte Gewebe zu Walzen 5' geführt wird. Nach dem letzten Imprägnier- und/oder Walzschritt sind die Prepregs zur Weiterverarbeitung bereit. Diese weisen vorteilhafterweise Harzgehalte - einschließlich der flüchtigen Lösungsmittelanteile - von 46% bis 50 % auf.

Damit die Festigkeitseigenschaften des Bauteiles (Ablösewerte im Sandwichschälversuch) noch zusätzlich verbessert werden, ist die beschriebene Maßnahme, daß die einzelnen Fasern des Gewebes bzw. Geleges flachgedrückt, vorzugsweise gewalzt, sind, wodurch sich die Lücken im Gewebe oder auch im Gelege schließen, besonders vorteilhaft. Da später die beim Imprägnieren beharzte Fläche, die Kontaktfläche, der Fäden zueinander sowie zu angrenzenden Schichten, die interlaminare Kontaktfläche, vergrößert wird, ist es möglich, einerseits die Verarbeitbarkeit, wesentlich gekennzeichnet durch die Klebrigkeit und damit durch die Haftung während der Herstellung eines Leichtbauteiles, und andererseits auch die statische Tragfähigkeit, gekennzeichnet durch die Haftung der ausgehärteten Prepreglagen, weitgehend zu verbessern.

Alternativ zu der oben beschriebenen Methode können die Prepregs natürlich auch im Schmelzverfahren hergestellt werden, wobei es notwendig ist, daß das Gewebe während des Verfahrens ebenfalls gewalzt wird oder wie zuvor beschrieben bereits vorher gewalztes Gewebe verwendet wird.

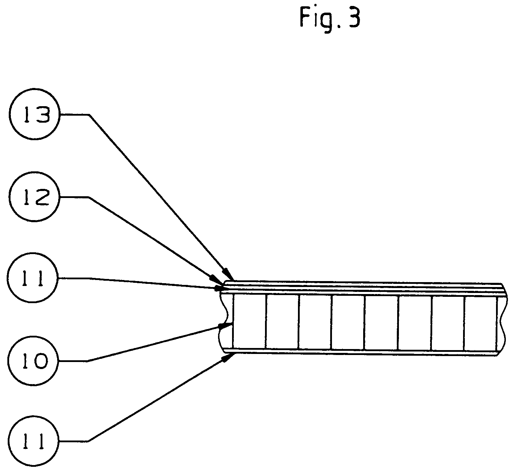

In Fig. 3 ist schematisch der Aufbau eines Leichtbauteils angegeben, wie er für die Herstellung von Behältern im Luftfahrtsektor, beispielsweise für Überkopf-Gepäckablagen, Koffer, Kisten od. dgl., aber auch als Verkleidungsteil, etwa als Innenraumpaneel, vorgesehen sein kann. Auf einem Kernmaterial 10, vorzugsweise wegen des günstigen Festigkeits-Gewichts-Verhältnisses einem Wabenbaustoff mit normal auf die Hauptbelastungsrichtung orientierten Waben, ist als Deckschicht zu beiden Seiten je ein erfindungsgemäßes Prepreg 11, vorzugsweise aus Carbonfaser-Gewebe, mit niedrigem Flächengewicht und angepaßtem Harzgehalt aufgebracht. Durch die geringeren Dicken des Carbonmaterials im Vergleich zu Glasfaserwerkstoffen ist zur weiteren Festigkeitssteigerung eine Erhöhung der Dicke des Kernmaterials gegenüber vergleichbaren Sandwichkonstruktionen durchgeführt worden. So kann beispielsweise für Überkopf-Gepäckablagen die Kerndicke von 13,5 mm auf 13,7 mm gesteigert werden, das in die Berechnung der Steifigkeit besonders günstig, da quadratisch, eingeht. Stellenweise könnte, wo Ausnehmungen, beispielsweise für die Anbringung von Zusatzteilen vorzusehen sind, oder durch besondere Belastungen während des Gebrauchs, bzw. durch geometrische Besonderheiten des Bauteiles, etwa starke Biegungen oder Abknickungen, die Gefahr der Delaminierung besteht, eine zusätzliche Lage eines Prepreg-Materials 12, wie in Fig. 3 dargestellt sinnvoller Weise ein leichtes Glasfaser-Prepreg, örtlich begrenzt auf einer oder auch beiden Seiten auf die Deckschicht 11 aufgebracht, um den Harzgehalt (flächenmäßiger Gehalt) an dieser Stelle zu erhöhen und die Verbindung der einzelnen Schichten, bzw. der Fäden untereinander durch eine geringere Maschenweite der Zwischen- oder Endlage zu garantieren.

Die sichtbare Oberfläche wird, speziell im Falle der Innenseite von Überkopf-Gepäckablagefächern, von einer die darunterliegenden Schichten optisch abdeckenden und schützenden Folie oder Platte 13, im speziellen von einer Tedlar-Folie gebildet. Der mechanischen Schutz gegen das Eindringen oder Schlagen von Gegenständen in die innere, hauptsächlich tragende Deckschicht aus Carbongewebe wird durch eine leichte Lage von Glasgewebe erfüllt.

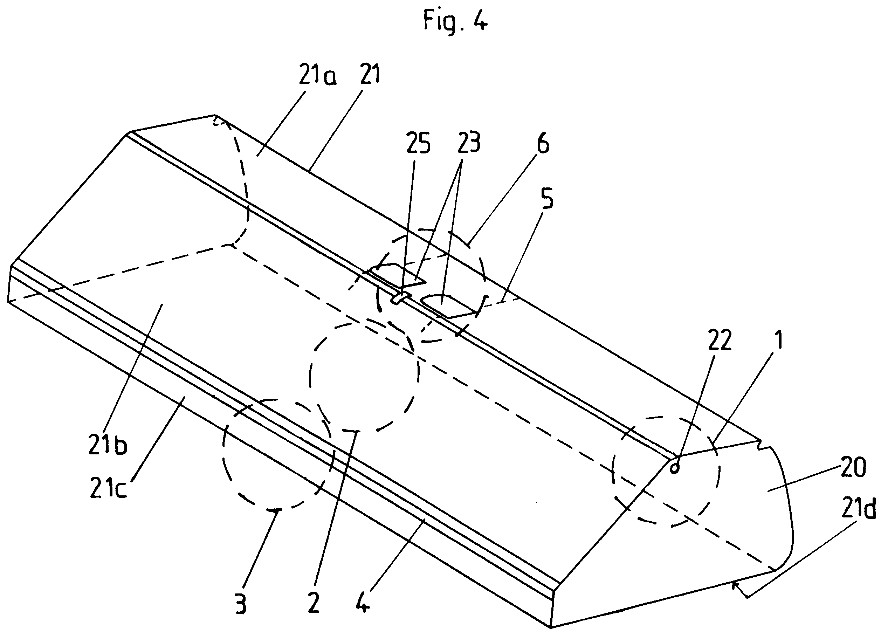

Ein spezielles Anwendungsbeispiel ist die in Fig. 4 schematisch dargestellte Überkopf-Gepäckablage. Sie besteht aus ebenen Endwänden 20, die mit einem, die Ummulde bildenden Bauteil 21 monolithisch hergestellt, und damit in einem Arbeitsgang mit diesem verbunden sind, Dieser Bauteil 21 wird mit den Endwänden aus einem entgegen der Einbauorientierung geöffneten Wandabschnitt 21a, einer schräg nach hinten und unten verlaufenden Hinterwandung 21b, den im wesentlichen senkrecht nach unten verlaufenden, hinteren Wandabschnitt 21c sowie dem Boden 21d der Gepäckablage gebildet. Die Vorderseite kann mittels einer - hier nicht dargestellten und im wesentlichen beliebig, jedoch sinnvoller Weise als Leichtbauteil, auch gemäß der vorliegenden Erfindung, ausgebildeten - Klappe verschlossen werden, die nachträglich am Behälter angebracht ist oder einstückig mit diesem, speziell mit dem die Ummulde bildenden Bauteil 21, ausgeführt sein kann.

Bei der Herstellung dieses speziellen Behälters werden die ihn bildenden Bauteile, Prepregs und Kernzuschnitte, geeignet auf eine Form aufgelegt und durch Druckbleche beim Vakuumverfahren fixiert. Anschließend erfolgt die Aushärtung des Aufbaues unter erhöhtem Außendruck und Temperatur, in einer zweckmäßigen Anlage, z.B. einem Autoklaven. Die dabei vorherrschenden Prozeßparameter sind so zu wählen, daß sowohl der größtmögliche Harzfluß und die damit beste Verbindung zwischen Kern und Deckschicht erreicht wird, als auch die gegebenenfalls bei der Aushärtereaktion produzierten flüchtigen Bestandteile bestmöglich abtransportiert werden können. Im gegebenen Fall hat es sich als zweckmäßig erwiesen, daß bei 80 - 100 °C eine Haltezeit von 60 bis 90 Minuten bei 0 bar und 100% Vakuum eingehalten wird, nach dieser Haltezeit wird die Temperatur auf 135 ± 4 °C erhöht und 120 Minuten bei 2 bar und 10% Vakuum gehalten. Das Aufheizen erfolgt mit einer Aufheizrate von ca. 3,6 °C/min und das Abkühlen erfolgt unter konstantem Druck bis zu einer Temperatur von ca. unter 47 °C.

Dies ist aber nicht der einzig denkbare Aushärtezyklus, der angewendet werden kann, so zeigten sich auch weniger aufwendige Zyklen, z.B. 135 °C mit einer Haltezeit von 90 Minuten bei 2 bar, als zielführend, der am meisten geeignete Zyklus jedoch wurde schließlich verwendet.

In den ebenen Endwänden 20 ist zur Aufhängung des Behälters an der Innenkonstruktion des Flugzeuges zumindest je eine Bohrung 22, die im Bereich des Überganges, das heißt, exakt an der Krümmung des Auflagerbereiches, einer als bewegliche (ohne Kernmaterial) Verbindung zwischen der oberen Wand 21a und der Hinterwand 21b gestalteten Konstruktion, vorgesehen. Ein weiterer Befestigungspunkt liegt in der Mitte der Gepäckablage, bei diesem werden die Verschraubungselemente durch eine geeignete Öffnung, Bohrung 25, die vorzugsweise durch zusätzliche Laminat- oder Prepreglagen 31 verstärkt ist, im Übergangsbereich mit den Versteifungsrippen oder Zwischenwänden verbunden.

Dieser Befestigungspunkt ist ein von der Innenkonstruktion des Flugzeugs nach unten ragender Arm mit einem im wesentlichen zu beiden Seiten der Zwischenwand oder Versteifungsrippe 24 gabelförmigen Ende, der mittels eines in Längsrichtung verschieblichen Bolzens die Verbindung zwischen Rumpf und Gepäckablage herstellt, um bei Belastung die Bewegungen der Gepäckablage in dieser Richtung, das heißt, das Verkürzen des Bauteiles zu gestatten.

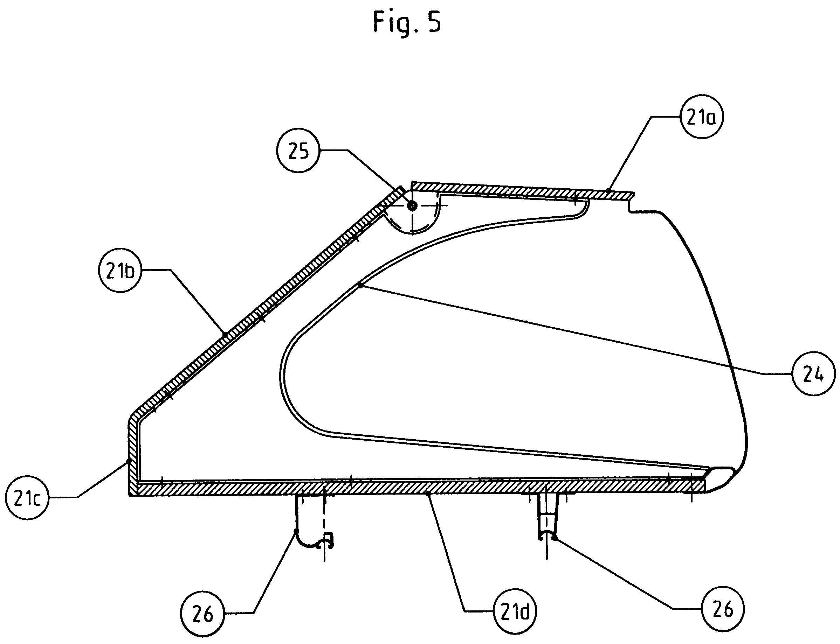

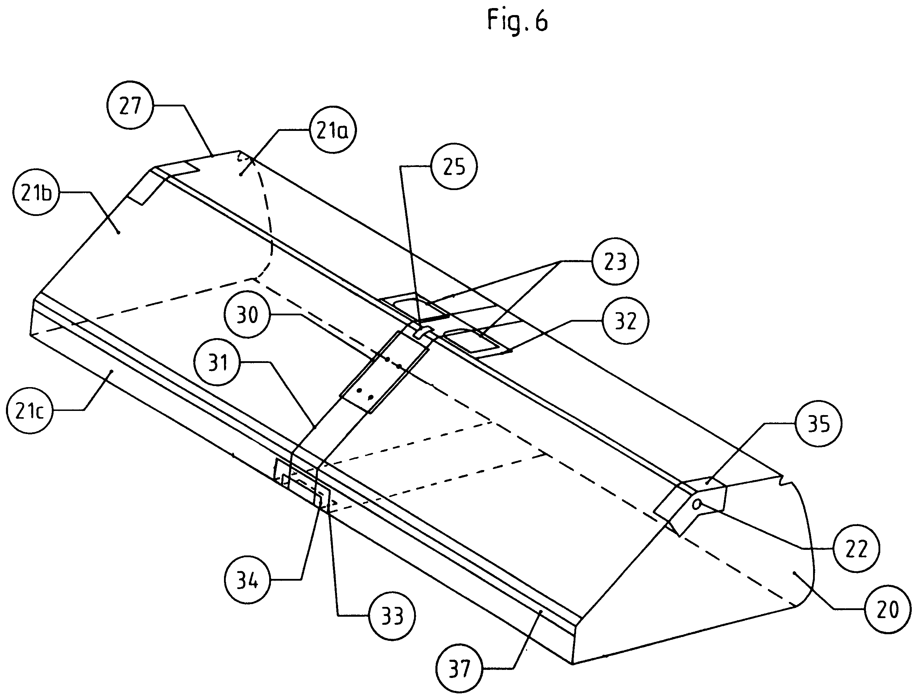

Wie in Fig. 5 deutlich erkennbar ist, ist die Zwischenwand 24 nicht genauso groß ausgeführt wie die Endwände 20 der Gepäckablage, sondern ist weit auf die Hinterwand 21b hin ausgeschnitten, sodaß eine Art Versteifungsrippe entsteht, und eine noch größere Gewichtsreduktion erreicht werden kann. Die Zwischenwand 24 ist im Behälter am Bauteil 21 befestigt, was vorzugsweise mittels Schrauben, allenfalls auch durch Nieten, Verklebung oder Verschweißung geschehen kann. Im Fall der Verschraubung oder Vernietung ist, wie dies in der schematischen perspektivischen Ansicht von hinten/oben, Fig. 6 dargestellt ist, in den Verbindungsbereichen zur lokalen Erhöhung der Festigkeit zumindest eine zusätzliche Lage Carbonfaser-Prepreg 30 vorgesehen. Den zuvor geschilderten Delaminationen bei der Herstellung der Bohrungen und den Ablösungen der Deckschichten bei Belastung kann zweckmäßiger Weise durch eine Lage Glasfaser-Prepreg 31 auf der Außenseite der Überkopf-Gepäckablage entlang des gesamten Kontakt- und Krafteinleitungsbereiches zwischen dem Bauteil 21 und der Zwischenwand, bzw. Versteifungsrippe 24 begegnet werden.

Im Bereich der Öffnungen 23 und 25 im oberen Wandabschnitt 21a, für den Zugang zum Gelenk der Aufhängung des Behälters und zu hinter dem Bauteil gelegenen Verbindungen und Anschlüssen, kann, wie in Fig. 6 dargestellt ist, zur lokalen Verstärkung und zur Vermeidung von Delaminationen, die bereits während der Bearbeitung auftreten, ebenfalls eine passende, äußere Lage, Glasfaser-Prepreg 32, in so einer Größe angeordnet sein, daß sich in der im Bauteil befindlichen Randzone noch Glasfasermaterial befindet.

Weiters ist eine zusätzliche und vorzugsweise als höchstbelastbares Carbonfaser-Prepreg 33 ausgeführte Verstärkungslage im Bereich einer Krafteinleitung 34 des Kantenbereiches zwischen Bodenwand 21d und hinterem Wandabschnitt 21c vorgesehen. Dieses, auch "X-Bracket" genannte, Krafteinleitungselement 34 nimmt die von außen auf den Faserverbundbauteil übertragenen Kräfte auf und leitet sie in den Bauteil ab, wobei einerseits die Kontaktfläche der Einleitung durch die zusätzliche Lage vergrößert wird und andererseits diese Stelle im Kantenbereich, der sich im Belastungstest als besonders kritisch in Hinblick auf Delaminationen zeigt, entscheidend verstärkt wird.

Schließlich sind auch bei den der Aufhängung dienenden Bohrungen 22 in den Endwänden zumindest 3 oder mehrere diese Bereiche verstärkende Lagen Prepreg 35 vorgesehen. Im konkreten Fall handelt es sich dabei wieder um ein oder mehrere erfindungsgemäße Carbonfaser-Prepregs, welche vorteilhafterweise über die Kante oder Kanten zwischen der oberen Wand 21a, bzw. auch dem Wandabschnitt 21 b der Gepäckablage auf die jeweilige Endwand 20 hin umgeschlagen sind. Wenn beispielsweise die obere Wand 21a bei der Aushärtung noch nicht an der entsprechenden Kante der Endwand 20 des Behälters anliegt, um so das Entformen zu erleichtern, und erst nachträglich im Verbindungsgelenk etwas gebogen und sinnvollerweise mittels Schrauben 27 oder auch Verklebung in der endgültigen Lage fixiert wird, sind eine oder alle Lagen zusätzliches Prepreg 35 nur im Bereich der hinteren Wandung 21b, die bereits während des Aushärtens durch diesen Vorgang selbst mit der Endwand 20 verbunden wird, über die Kante umgeschlagen, und verläuft das Prepreg 35 im verschraubten Abschnitt auf Wand 21a und Endwand 20 getrennt.

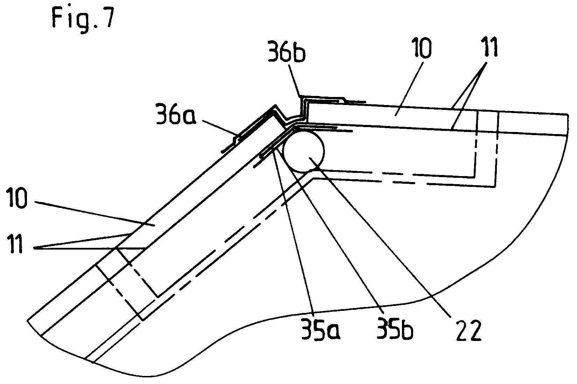

Die Fig. 7 zeigt ein bevorzugtes Beispiel für die Ausführung der Gepäckablage im Bereich der Bohrungen 22 in schematischer Darstellung. Dabei sind auf der inneren Seite bezüglich des Kernwerkstoffes 10 zumindest 2 zusätzliche Carbonfaser-Prepregs 35a bis 35b, die einander in passender Weise überdecken und dabei in ihrer Größe abgestuft sind, sodaß sich ein allmähliches Übergang im Bereich der Bohrung 22 ergibt. Gleiches gilt vorteilhafterweise auch für die verstärkend auf der Außenseite des Kernes 10 angeordneten, mindestens zwei weiteren Prepreg-Lagen 36a und 36b, die passender Weise, da es sich um die beiden höchstbelasteten Bereiche handelt, ebenfalls mit Carbonfaser-Prepregs ausgeführt sind.

Damit bei größerer Belastungen der Gepäckablage Delaminationen verhindert werden, ist auch im stark geknickten bzw. gebogenen Bereich des Überganges von der Hinterwand 21b zum Wandabschnitt 21c die von diesem Übergang gebildete Kante zumindest eine zusätzliche Lage Glasfaser-Prepreg als Verstärkungslage vorzusehen. Diese befindet sich, da es sich bei dieser Delamination um Ablösungen vom Kern handelt, auch direkt auf diesem.

In der ersten nachfolgenden Tabelle A sind für jeweils 1 m² große Platten mit erfindungsgemäßem Aufbau die erzielten Gewichte - aus denen denen erzielbare Gewichtsverminderung bereits deutlich ersichtlich ist und die mit den geschilderten Konstruktionsangaben auch erreicht werden kann - und durch Tests ermittelte Festigkeitswerte im Vergleich zu einer Platte mit herkömmlichem Aufbau (erste Spalte) angegeben, durch welche eine deutliche Verbesserung des Festigkeits/Gewichtverhältnis nachgewiesen werden konnte.

In einer weiteren Tabelle B sind die Gewichte und die jeweilige Gewichtsersparnis von im wesentlichen den Ausführungsformen der Fig. 4 bis 7 entsprechenden Überkopf-Gepäckablagen gemäß der Erfindung im Vergleich mit einer herkömmlich aufgebauten und die selben Anforderungen erfüllenden Gepäckablage angegeben. Je nach Flugzeugtyp lassen sich für ein komplettes Set der Ausstattung erfindungsgemäß Gewichtseinsparungen in der Größenordnung von ca. 40 kg realisieren.

**Tabelle A**

| Rohgewicht/ Harzgehalt<br>Ermittelte Werte | 490/37% | 150/45% | 150/41% | 160/45% | 170/45% | 170/45%<br>gewalzt | 190/41% | 150/41%<br>gewalzt |
|---|---|---|---|---|---|---|---|---|
| Dicke (mm) | 14,074 | 13,932 | 13,922 | 13,942 | 13,950 | 13,962 | 13,998 | 13,887 |
| Kraft/Weg (kg/cm) | 426,529 | 568,332 | 554,426 | 568,164 | 637,635 | 664,549 | 654,961 | 587,732 |
| Durchbiegung (mm) | 15,040 | 11,280 | 11,573 | 11,280 | 9,627 | 10,053 | 9,800 | 10,920 |
| Bruchlast (kg) | 58,325 | 52,023 | 50,360 | 55,687 | 56,267 | 57,767 | 66,509 | 52,468 |
| Gewicht (g/m$^2$) | 1898 | 1411 | 1387 | 1458 | 1478 | 1496 | 1563 | 1290 |
| Bruchspannung (kg/cm$^2$) | 285012,18 | 394710,31 | 419049,51 | 358740,43 | 353000,93 | 419439,88 | 384545,13 | 355973,223 |
| Schälversuch-Tedlar (N) | 88,30 | 37,67 | 50,33 | 40,67 | 56,67 | 44,33 | 37,67 | ca. 50,00 |
| Schälversuch (N) | 48,33 | 32,33 | 36,00 | 35,33 | 48,33 | 37,33 | 35,00 | > 35,00 |
| Gewichtsreduktion(g/m$^2$) |  | 487 | 511 | 440 | 420 | 402 | 335 | 608 |
| Gewichtsreduktion (%) |  | 25,660 | 26,920 | 23,180 | 22,130 | 21,180 | 17,650 | 32,034 |

EP 0 658 644 A2

## Tabelle B

| Behälter DAN 407-07 | Behälter - 170g/m² gewalzt | Behälter - 150g/m² | Behälter - 150g/m² gewalzt | Behälter - 150g/m² gewalzt/verstärkt (Fig.6) |
|---|---|---|---|---|
| 8200g | 7006g | 6502g | 6047g | 6196g |
| 100% | 85,44% | 79,29% | 73,74% | 75,56% |

**EP 0 658 644 A2**

**Patentansprüche**

1. Gewebe oder Gelege, insbesondere zur Herstellung von Prepregs, speziell zur Anfertigung von Bauteilen in der Luftfahrtindustrie, hergestellte aus Fasern, vorzugsweise Carbonfasern, mit einem Elastizitätsmodul von über 80 000 N/mm², vorzugsweise von über 200 000 N/mm², und einem spezifischen Gewicht von vorzugsweise 1,5 g/cm³, maximal 2,1 g/cm³, wobei die Fasern aus Einzelfilamenten bestehen und diese und somit auch das Gewebe bzw. Gelege allenfalls flachgedrückt, vorzugsweise gewalzt, sind, dadurch gekennzeichnet, daß jede Faser aus jeweils zumindest 2000, vorzugsweise 3000 Einzelfilamenten (3K = 200 tex = 200 g/1000m) besteht.

2. Gewebe nach Anspruch 1, dadurch gekennzeichnet, daß das Gewebe im Webstil der Leinwandbindung ("Plain Weave") gearbeitet ist (Fig. 1a).

3. Gewebe oder Gelege nach Anspruch 1 oder 2, dadurch gekennzeichnet, daß das Flächengewicht unter 190 g/m², vorzugsweise zwischen 170 und 150 g/m², speziell 150 g/m² beträgt.

4. Prepreg aus einem Gewebe oder Gelege nach einem der vorhergehenden Ansprüche und einem härtbaren Kunstharz (Duroplast).

5. Prepreg nach Anspruch 4, dadurch gekennzeichnet, daß der Harzgehalt des Prepregs, einschließlich der flüchtigen Bestandteile zwischen 37% und 55%, vorzugsweise zwischen 46% und 50% , speziell 47%, beträgt.

6. Prepreg nach einem der Ansprüche 4 oder 5, gekennzeichnet durch die Verwendung von Phenolharz, allenfalls von Epoxydharz, mit einem H-Typ-Lösungsmittel, das aus 90% Ethanol und 10% Azeton, oder vozugsweise einem mit HE bezeichneten Lösungsmitteltyp, der aus 100% Ethanol besteht.

7. Verfahren zur Herstellung eines Prepregs, gekennzeichnet durch das Imprägnieren eines Gewebes oder Geleges, vorzugsweise eines Gewebes oder Geleges gemäß den Ansprüchen 1 bis 3, mit einem härtbaren Kunstharz und durch das Walzen des Gewebes bzw. Geleges vor, in an sich bekannter Weise nach oder auch während des Imprägnierens, gegebenenfalls auch zwischen jeweils zwei Imprägnierschritten (Fig. 2).

8. Verfahren nach Anspruch 7, gekennzeichnet durch das dem oder jedem Walzschritt vorangehende Imprägnieren mit einem höheren Harzgehalt als dem beim Endprodukt geforderten Harzgehalt.

9. Leichtbauteil, insbesondere Platte für die Luftfahrtindustrie, beispielsweise für die Verwendung als Wandpaneel, Bauplatte od. dgl., bestehend aus zumindest einem, vorzugsweise aus Wabenmaterialien bestehenden Kern, der sich über den überwiegenden Flächenanteil des Bauteils erstreckt, und zumindest je einer Deckschicht zu beiden Seiten des oder jedes Kerns, dadurch gekennzeichnet, daß zumindest eine der Deckschichten (11), vorzugsweise beide Deckschichten, aus einem Laminat, vorzugsweise unter Verwendung eines Gewebes oder Geleges gemäß einem der Ansprüche 1 bis 3, welches mittels eines Klebers mit dem Kern verbunden wurde, oder einem ausgehärteten Prepreg gemäß einem der Ansprüche 4 bis 6 besteht.

10. Leichtbauteil nach Anspruch 9, dadurch gekennzeichnet, daß an allfälligen Knick- oder Biegestellen des Bauteils zumindest eine zusätzliche, diese Knick- oder Biegestellen überlappende Prepreg-Lage aus Glasfasergewebe oder aus Laminat unter Verwendung des Gewebes oder Geleges gemäß einem der Ansprüche 1 bis 3 oder aus Prepregs nach einem der Ansprüche 4 bis 6 vorgesehen ist, welche vorzugsweise direkt auf dem Kernwerkstoff (10), unterhalb der oder jeder Deckschicht (11) vorgesehen ist.

11. Leichtbauteil nach Anspruch 9 oder 10, dadurch gekennzeichnet, daß an Stellen, an denen Bohrungen oder Ausnehmungen vorgesehen werden müssen, zumindest eine zusätzliche Prepreg- oder Laminat-Lage aus Glasfasergewebe, vorzugsweise auf der dem Kern (10) abgewandten Seite der Deckschicht (11), vorgesehen ist.

12. Behälter für die Luftfahrtindustrie, bestehend aus ebenen End- (20) und allenfalls Zwischenwänden (24),

**12**

sowie aus einem gebogenen oder geknickten, zumindest teilweise die Seitenwände oder Ummulde bildenden Bauteil (21), welche jeweils vorzugsweise in Sandwichbauweise gefertigte Kompositteile aus Carbonfaserverbundwerkstoff (11) mit vorzugsweise einem Wabenbaustoff als Kern (10) sind, dadurch gekennzeichnet, daß die End-(20) und /oder die Zwischenwände (24) und/oder der die Ummulde bildende Bauteil (21) in Sandwichbauweise gefertigt sind und aus Faserverbundbauteilen entsprechend den in den Ansprüchen 9 bis 11 beschriebenen Leichtbauteilen aufgebaut sind.

13. Behälter nach Anspruch 12, dadurch gekennzeichnet, daß der die Seitenwände bzw. Ummulde bildende Bauteil (21) zumindest über einen Teilbereich des Umfanges der End- (20) und/oder Zwischenwände (24) mit diesen durch Überlappung der Prepregs (11) oder Laminate und über einen anderen Teilbereich des Umfanges der ebenen End- (20) und/oder Zwischenwände (24) mittels einer nachträglich angefertigten Verbindung, vorzugsweise einer Verschraubung (bei 27), Verklebung oder Verschweißung, verbunden ist.

14. Behälter nach einem der Ansprüche 12 oder 13, dadurch gekennzeichnet, daß an den Übergangsstellen zwischen End- (20) und/oder Zwischenwänden (24) und dem die Seitenwände oder Ummulde bildenden Bauteil (21) und/oder an Biege- bzw. Knickstellen in den genannten Wänden bzw. dem Bauteil zumindest eine weitere, die Übergangsstellen bzw. Biege- bzw. Knickstellen überlappende Laminat oder Prepreg-Lage (35, 36, 33), vorzugsweise unterhalb der Deckschicht (11) oder mehrerer Deckschichten, vorzusweise direkt auf dem Kernwerkstoff (10), vorgesehen ist.

15. Behälter nach Anspruch 14, dadurch gekennzeichnet, daß zumindest zwei einander überdeckende Laminat- oder Prepreg-Lagen (35a, 35b, 36a, 36b) mit unterschiedlichen Abmessungen vorgesehen sind.

16. Behälter nach einem der Ansprüche 12 bis 15, dadurch gekennzeichnet, daß an Stellen, an denen Bohrungen oder Ausnehmungen (23 , 25) vorgesehen werden müssen, zumindest eine zusätzliche Laminat- oder Prepreg-Lage aus Glasfasergewebe (31, 32), vorzugsweise oberhalb der Deckschicht (11) auf der dem Kern (10) abgewandten Seite, vorgesehen ist.

17. Behälter nach einem der Ansprüche 12 bis 16, dadurch gekennzeichnet, daß an Stellen, an denen End- (20) und/oder Zwischenwände (24) mit dem die Seitenwände oder Ummulde bildenden Bauteil (21) verbunden werden müssen, zumindest eine zusätzliche Laminat- oder Prepreg-Lage aus Glasfasergewebe (31), vorzugsweise oberhalb der Deckschicht (11), vorgesehen ist.

18. Überkopf-Gepäckablage, bestehend aus einem Behälter gemäß einem der Ansprüche 12 bis 17 mit zwei ebenen, im wesentlichen trapezförmigen Endwänden (20), einer im Inneren des Behälters nachträglich angebrachten Zwischenwand (24) bzw. Versteifungs- oder Teilungsrippe und einem die Ummulde bildenden monolithischen Bauteil (21), wobei in jeder der Endwände (20) nahe einem oberen Eckpunkt derselben eine der Aufhängung dienende Bohrung (22) vorgesehen ist, dadurch gekennzeichnet, daß der Bauteil (21) im Bereich der Bohrungen (22) in den Endwänden (20) mit mehreren, insbesondere drei bis fünf, vorzugsweise vier, zusätzlichen Lagen von Carbon-Laminaten oder Carbon-Prepregs (35a und b, 36a und b) verstärkt ist, wobei vorzugsweise die zusätzlichen Lagen (35 und 36) auf die Endwände (20) hin umgeschlagen sind.

19. Überkopf-Gepäckablage nach Anspruch 18, dadurch gekennzeichnet, daß im oberen Abschnitt (21a) des die Ummulde bildenden Bauteils (21) zu beiden Seiten der Zwischenwand (24) zwei Bohrungen (23) und eine Öffnung zur Durchführung eines der Aufhängung dienenden Trägers vorgesehen sind, und daß der Bauteil (21) im Bereich dieser Bohrungen (23) mit zumindest einer Lage Glasfaser-Prepreg (32) bzw. - Laminat und einem Streifen Glasfaserprepreg (31) oder -laminat verstärkt ist.

20. Überkopf-Gepäckablage nach einem der Ansprüche 18 oder 19, dadurch gekennzeichnet, daß ein Verstärkungselement (34) in Höhe der Zwischenwand (24) zwischen dem unteren (21d) und dem hinteren (21c) Wandabschnitt des die Ummulde bildenden Bauteils (21) verläuft und im Bereich dieses Verstärkungselementes (34) zumindest ein dieses Element überdeckende Lage Carbon-Prepreg (33) oder -Laminat vorgesehen ist, das vorzugsweise so groß gewählt ist, daß die Enden auf dem hinteren und dem unteren Wandabschnitt gleichweit von der unteren Bauteilkante entfernt sind und die auftretenden Kräfte gleichmäßig in den Bauteil eingeleitet werden.

Fig.1

a)      b)      c)

d)      e)      f)

Fig. 3

Fig. 4

Fig. 5

Fig.6

Fig.7